# EUROPÄISCHE PATENTSCHRIFT

(11) **EP 0 884 150 B1**
(45) Veröffentlichungstag und Bekanntmachung des Hinweises auf die Patenterteilung: **22.03.2006**
(21) Anmeldenummer: 98113740.9
(22) Anmeldetag: 22.09.1993
(51) Int. Cl.: B27K 3/34, B27K 3/50, A01N 43/653, A01N 25/02

(54) **Mikrobizide Mittel**
Microbicidal agents
Agents microbicides

(30) Priorität: 05.10.1992 DE 4233337
(43) Veröffentlichungstag der Anmeldung: 16.12.1998
(62) Teilanmeldung aus: 93115261.5
(73) Patentinhaber: LANXESS Deutschland GmbH, 51369 Leverkusen (DE)
(72) Erfinder: Heuer, Lutz, Dr., 51542 Dormagen (DE); Wachtler, Peter, Dr., 51061 Köln (DE); Schwamborn, Michael, Dr., 51069 Köln (DE); Kugler, Martin, Dr., 42799 Leichlingen (DE); Buschhaus, Hans-Ulrich, Dr., 47800 Krefeld (DE)

(56) Entgegenhaltungen:
- EP-A- 0 336 186
- EP-A- 0 554 833
- EP-A- 0 555 186
- WO-A-94/05636
- DE-A- 3 406 993
- US-A- 4 994 480

## Beschreibung

Die Anmeldung betrifft die Verwendung der Verbindung α-(chlorphenyl-α-(1-cyclopropyl-ethyl)-1H-1,2,4-triazol-1-ethanol (Cyprotonazole) als affeiniges Mikrobizid zum Schutz von technischen Materialien.

Es ist bekannt, daß die in der DE-OS 3 406 993 beschriebenen Azolderivate zum Schutz von Pflanzen verwendet werden können.

EP-A-336 186 offenbart die Verwendung von Derivaten des Triazol methylcyclopropylcarbinols als Materialschutzmittel.

Gegenstand der vorliegenden Anmeldung ist die Verwendung von Cyproconazole der Formel (I) 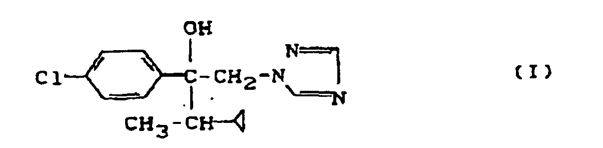 dessen Metallsalze oder Säureadditionsverbindungen, in Abwesenheit ines Kombinationspartners aus der Meine der Fungizide, Algizide, Insektizide und/oder Molluskizide, als Mikrobizid zum Schutz von technischen Materialien gegen im Materialschutz relevante Mikroorganismen, wobei als Materialien Holz, Mauerwerk und Zwischenprodukte die aus der Papierherstellung erhalten werden ausgenommen sind.

Das Azolderivat (I) kann nicht nur in Form der freien Base sondern auch in Form eines Metallsalz-Komplexes oder als Säureadditions-Salz vorliegen. Als Metallsalz kommen vorzugsweise Salze von Metallen der II, bis IV. Hauptgruppe und der I. und II, sowie IV. bis VII. Nebengruppe des Periodensystems in Frage, wobei Kupfer, Zink, Mangan, Magnesium, Zinn, Eisen, Calcium, Aluminium, Blei, Chrom, Kobalt und Nickel, beispielhaft genannt seien.

Als Anionen der Salze kommen solche in Betracht, die sich vorzugsweise von folgenden Säuren ableiten: Halogenwasserstoffsäuren, wie z.B. Chlorwasserstoffsäure und Bromwasserstorfsäure, ferner Phosphorsäure, Salpetersäure und Schwefelsäure.

Die Metallsalz-Komplexe des Azolderivats können in einfacher Weise nach üblichen Verfahren erhalten werden, so z.B. durch Lösen des Metallsalzes in Alkohol, z.B. Ethanol und Hinzufügen zum Azolfungizid. Man kann Metallsalz-Komplexe in bekannter Weise, z.B. durch Abfiltrieren isolieren und gegebenenfalls durch Umkrislallisieren reinigen.

Zur Herstellung von Säureadditionssalzen des Azolderivates kommen vorzugsweise folgende Säuren in Frage: Die Halogenwasserstoffsäuren, wie z.B. Chlorwasserstoffsäure und Bromwasserstoffsäure, insbesondere Chlorwasserstoffsäure, ferner Phosphorsäure, Salpetersäure, Schwefelsäure, mono- und bifunktionelle Carbonsäuren und Hydioxycarbonsäuren, wie z.B. Essigsäure, Propionsäure, 2-Ethylhexansäure, Buttersäure, Mandelsäure, Oxalsäure, Bernsteinsäure, 2-Hydroxy-ethan-dicarbonsäure, Maleinsäure, Fumarsäure, Weinsäure, Citroaensäure, Salicylsäure, Sorbinsäure, Milchsäure sowie Sulfonsäuren, wie z.B. p-Toluolsulfonsäure, p-Detyl-phenylsulfonsäure, p-Dodecyl-phenylsulfonsäure, 1,4-Naphthalindisulfonsäure, Alkansulfonsäuren, Benzoesäure und gegebenenfalls substituierte Benzoesäuren.

Die Säureaciditions-Salze der Verbindungen können in einfacher Weise nach üblichen Salzbildungsmethoden, z.B. durch Lösung einer Verbindung in einem geeigneten inerten Lösungsmittel und Hinzufügen der Säure, z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Besonders bevorzugt ist die Verbindung (R*, R*)-α-(4-Chlorphenyl)-α-(1-cyclopropylethyl)1H-1,2,4-triazol-1-ethanol (Cyproconazole).

Überraschenderweise zeigen diese Verbindungen eine besonders hohe mikrobizide, insbesondere fungizide Wirkung, verbunden mit einem, breiten Wirkspektrum gegen im Materialschutz relevante Mikroorganismen; sie sind vor allem wirksam gegen Schimmelpilze; holzverfärbende und holzzerstörende Pilze. Beispielhaft - ohne jedoch zu limitieren - seien die folgenden Gruppen von Mikroorganismen genannt:
A: Holzverfärbende Pilze:
   A1: Ascomyceten:
      Ceratocystis wie Ceralocyslis minor
   A2: Deuteromyceten;
      Aspergillus wie Aspergillus niger
      Aureobasidium wie Aureobasidium pullulans
      Dactylium wie Dactylium fusarioides
      Penicillium wie Penicillium brevicaule oder
      Penicillium variabile
      Sclerophoma wie Sclerophoma pithyophila
      Scopularia wie Scopularia phycomyces
      Trichoderma wie Trichoderma viride oder
      Trichoderma lignorum
   A3: Zygomyceten:
      Mucor wie Mucor spinorus
3: Holzzerstörende Pilze:
   B1: Ascomyceten:
      Chaetomium wie Chastomium globosum oder
      Chaetomium alba-arenulum
      Humicola wie Humicola grisea
      Petriella wie Petriella setifera
      Trichurus wie Trichurus spiralis
   B2: Basidiomyceten
      Coniophora wie Coniophora puteana
      Coriolus wie Coriolus versicolor
      Donkioporia wie Donkioporia expansa
      Glenospora wie Glenospora graphii
      Gloeophyllum wie Gloeophyllum abietinum oder
      Gloeophyllum adoratum oder Gl. protactum oder
      Gloeophyllum sepiarium oder Gl. trabeum
      Lentinus wie Lentinus cyathiformes oder
      Lentinus edodes oder Lentinus lepideus oder
      Lentinus grinus oder L. squarrolosus
      Paxillus wie Paxillus panaoides
      Pleurotus wie Pleurotis ostreatus
      Poria wie Poria monticola oder Poria placenta oder Poria vaillantii oder Paria vaporaria
      Serpula wie Serpula himantoides oder Serpula lacrymans
      Stereum wie Stereum hirsutum
      Tyromyces wie Tyromyces palustris
   B3: Deuteromyceten
      Alternaria wie Alternaria tenius
      Cladosporium wie Cladosporium herbarum

Die Menge des eingesetzten Wirkstoffes ist von der Art und dem Vorkommen der Mikroorganismen der Keimzahl und von dem Medium abhängig. Die optimale Einsatzmenge kann bei der Anwendung jeweils durch Testreihen ermittelt werden. Im allgemeinen ist es jedoch ausreichend 0,001 bis 20 Gew.-%, vorzugsweise 0,05 bis 10 Gew.-%, des Wirkstoff, bezogen auf das zu schützende Material, einzusetzen.

Der Wirkstoff kann als solcher, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen des Wirkstoffes mit mindestens einem Lösungs- bzw, Verdünnungsmittel, Emulgator, Dispergier- und/oder Binde-oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Als Lösungs- bzw. Verdünnungsmittel kommen organisch-chemische Lösungsmittel oder Lösungsmittelgemische und/oder ein polares organisches Lösungsmittel oder Lösungsmittelgemische und/oder ein öliges bzw. ölartiges organisch-chemisches Lösungsmittel oder Lösungsmittelgemisch und/oder Wasser mit gegebenenfalls einem Emulgator und/oder Netzmittel in Frage. Als übliche schwerflüchtige wasserunlösliche ölige oder ölartige Lösungsmittel werden vorzugsweise die jeweiligen Mineral-öle/mineralölhaltige Lösungsmittelgemische oder deren Aromatenfraktionen verwendet. Vorzugsweise seien Testbenzin, Petroleum oder Alkylbenzole genannt, daneben Spindelöl und Monochlornaphthalin. Die Siedebereiche dieser schwerflüchtigen Lösemittel(gemische) überstreichen den Bereich von ca. 170°C bis maximal 350°C.

Die vorbeschriebenen schwerflüchtigen öligen oder ölartigen Lösungsmittel können teilweise durch leichter flüchtige organisch-chemische Lösungsmittel ersetzt werden.

Zur Herstellung eines Materialschutzmittels wird vorzugsweise ein Teil des oben beschriebenen Lösungsmittels oder Lösungsmittelgemisches durch ein polares organisch-chemisches Lösungsmittel oder Lösungsmittelgemisch ersetzt. Vorzugsweise gelangen dabei Lösungsmittel, die Hydroxylgruppen, Estergruppen, Ethergruppen oder Gemische dieser Funktionalität enthalten, zum Einsatz. Beispielhaft seien Ester oder Glykolether genannt. Als Bindemittel werden erfindungsgemäβ verstanden wasserverdünnbare bzw, in organisch-chemischen Lösungsmitteln lösliche, dispergier- oder emulgierbare Kunstharze, bindende trocknende öle, z.B. auf Basis von Acrylharzen, Vinylharzen, Polyesterharzen, Polyurethanharzen, Alkydharzen, Phenolharzen, Kohlenwasserstoffharzen, Silikon harzen. Das benutzte Bindemittel kann als Lösung, Emulsion oder Dispersion eingesetzt werden. Vorzugsweise werden Gemische aus Alkydharzen und trockendem pflanzlichen Öl verwendet. Besonders bevorzugt sind Alkydharze mit einem Ölanteil zwischen 45 und 70 %.

Das erwähnte Bindemittel kann ganz oder teilweise durch ein Fixierungsmittel (gemisch) oder ein Weichmacher (gemisch) ersetzt werden. Diese Zusätze sollen einer Verflüchtigung der wirkstoffe sowie einer Kristallisation bzw. Ausfällen vorbeugen. Vorzugsweise ersetzen sie 0,01 bis 30 % des Bindemittels (bezogen auf 100 % des eingesetzten Bindemittels).

Die Weichmacher stammen aus den chemischen Klassen der Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat und Amylstearat, Oleate wie Butyloleat, Glycerinether oder höhermolekulare Glykolether, Glycerinester sowie p-Toluolsulfonsaureester.

Fixierungsmittel basieren chemisch auf Polyvinylalkylethern wie z.B. Polyvinylmethylether oder Ketonen wie Benzophenon, Ethylenbenzophenon.

Als Lösungs- bzw. Verdünnungsmittel kommt vorzugsweise Wasser in Frage, gegebenenfalls in Mischung mit einem oder mehreren der obengenannten Lösungs- bzw. Verdünnungsmittel, Emulgatoren und Dispergatoren.

Technische Materialien sind erfindungsgemäß nicht lebende Materialien, die für die Verwendung in der Technik zubereitet worden sind. Beispielsweise können technische Materialien, die durch den Wirkstoff vor mikrobieller Veränderung oder Zerstörung geschützt werden sollen, Klebstoffe, Leime, Papiere und Karton, Textilien, Leder, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produkttionsanlagen, beispielsweise Kühlwasserkreisläufe, genannt, die durch Vermehrung von Mikroorganismen beeinträchtigt werden können. Bevorzugte technische Materialien im Sinne der Erfindung sind Klebstoffe, Leime, Papiere und Kartone, Leder, Anstrichmittel, Kühlschmiermittel, wäßrige Hydraulikflüssigkeiten und KühlKreisläufe.

Die zum Schutz der technischen Materialien verwendeten mikrobiziden Mittel oder Konzentrate enthalten den Wirkstoff der Formel (I) in einer Konzentration von 0,01 bis 95 Gew.-X, insbesondere 0,01 bis 60 Gew.-%.

Die erfindungsgemäßen Mittel ermöglichen in vorteilhafter Weise, die bisher verfügbaren mikrobiziden Mittel durch effektivere zu ersetzen. Sie zeigen eine gute Stabilität und haben in vorteilhafter Weise ein breites Wirkungsspektrum.

### Beispiel 1

### Hemmtest an Riesenkolonien von Basidiomyceten

Aus Kolonien von Gloeophyllum trabeum, Coniophora putsana, Poria placenta, Lentinus tigrinus, Coriolus versicolor und Stereum sanguinolentum wurden Mycelstücke ausgestochen und auf einem Malzextrakt-Pepton-haltigen Agarnährboden bei 26°C inkubiert, Die Hemmung des Hyphenwachstums auf wirkstoffhaltigen Nährböden wurde mit dem Längewachstum auf Nährboden ohne Wirkstoffzusatz verglichen und als prozentuale Hemmung bonitiert.

Bei einer Konzentration von 10 ppm erhält man mit der Verbindung Cyproconazol eine 100 %ige Hemmung.

## Patentansprüche

1. Verwendung von Cyproconazole der Formel (I) 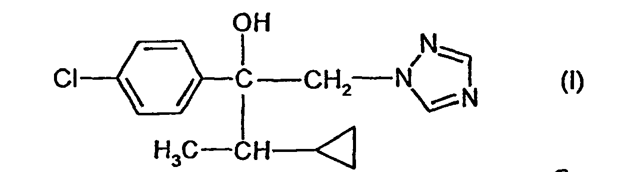 deren Metallsalze oder Säureadditionsverbindungen in Abwesenheit eines Kombinationspartners aus der Reihe der Fungizide, Algizide, Insektizide und/oder Molluskizide als Mikrobizid zum Schutz von technischen Materialien gegen im Materialschutz relevante Mikroorganismen, wobei als technische Materialien Holz, Mauerwerk und zwischen Produkte die aus der Papier herstellung erhalten werden ausgenommen sind.

2. Verwendung gemäß Anspruch 1 zum Schutz von Klebstoff, Leim, Papier und Karton, Textilien, Leder, Anstrichmittel und Kunststoffartikel, Kühlschmierstoffe, wäßrige Hydraulikflüssigkeiten und Kühlkreisläufe.

3. Verfahren zum Schutz von technischen Materialien ausgenommen Holz, Mauerwerk, und zwischen Produkte die aus der Papier herstellung erhalten werden **dadurch gekennzeichnet, daß** man diese Materialien mit Cyproconazole der Formel (I) 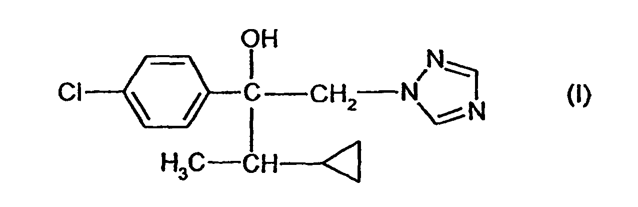 in Abwesenheit eines Kombinationspartners aus der Reihe der Fungizide, Algizide, Insektizide und/oder Molluskizide behandelt.

4. Technische Materialien ausgenommen Holz, Mauerwerk und zwischen Produkte die aus der Papier herstellung erhalten werden enthaltend eine Verbindung der Formel (I) in Abwesenheit eines Kombinationspartners aus der Reihe der Fungizide, Algizide, Insektizide und/oder Molluskizide.

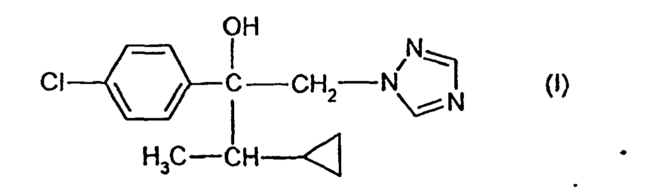

## Claims

1. Use of cyproconazole, of the formula (I), 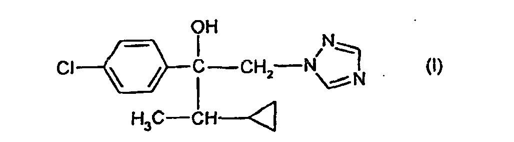 its metal salts or acid addition compounds in the absence of a component of combinations from the series consisting of the fungicides, algicides, insecticides and/or molluscicides as microbicide for the protection of industrial materials against microorganisms which are relevant in the protection of materials, industrial materials which are excepted being timber, masonry and intermediates from papermaking.

2. Use according to Claim 1 for protecting glue, size, paper and board, textiles, leather, paints and plastic articles, cooling lubricants, aqueous hydraulic fluids and cooling circuits.

3. Method of protecting industrial materials with the exception of timber, masonry and intermediates obtained from paper making, **characterized in that** these materials are treated with cyproconazole, of the formula (I), 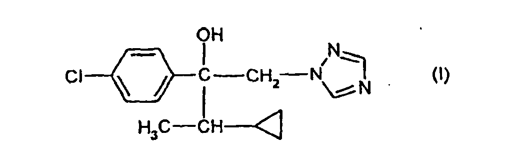 in the absence of a component of combinations from the series consisting of the fungicides, algicides, insecticides and/or molluscicides.

4. Industrial materials with the exception of timber, masonry and intermediates obtained from paper making, comprising a compound of the formula (I) in the absence of a component of combinations from the series of the fungicides, algicides, insecticides and/or molluscicides

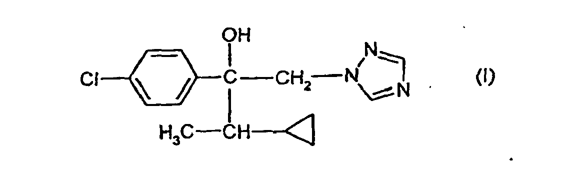

## Revendications

1. Utilisation de cyproconazoles de formule (I) 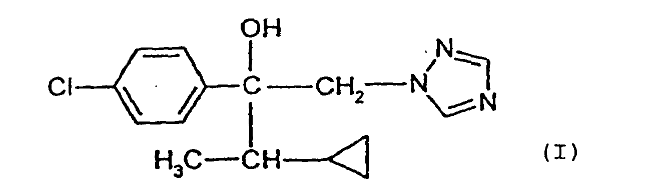 de leurs sels métalliques ou de leurs composés d'addition à un acide, en l'absence d'un partenaire de combinaison parmi le groupe constitué des fongicides, des algicides, des insecticides et/ou des molluscicides, en tant que microbicide pour la protection de matières industrielles contre des mico-orgnanismes importants dans la protection des matières, le bois, la maçonnerie et les produits intermédiaires qui sont obtenus à partir de la production de papier étant exclus en tant que matières industrielles.

2. Utilisation selon la revendication 1 pour la protection des adhésifs, de la colle, du papier et du carton, des textiles, du cuir, des peintures et articles en matières plastique, des réfrigérants, des fluides hydrauliques aqueux et des cycles de refroidissement.

3. Procédé de protection de matières industrielles à l'exclusion du bois, de la maçonnerie et des produits intermédiaires qui sont obtenus à partir de la production de papier, **caractérisé en ce que** les matières sont traitées avec des cyproconazoles de formule (I)

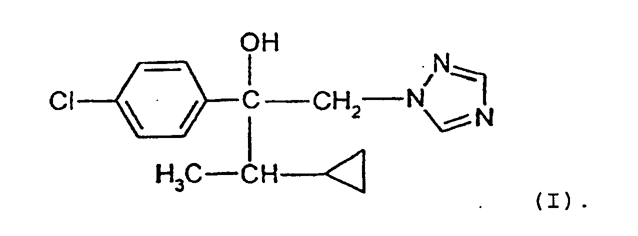

4. Matières industrielles à l'exception du bois, de la maçonnerie et des produits intermédiaires qui sont obtenus à partir de la production de papier, contenant un composé de formule (I) en l'absence d'un partenaire de combinaison parmi le groupe constitué des fongicides, des algicides, des insecticides et/ou des molluscicides
